# EUROPEAN PATENT SPECIFICATION

(11) **EP 3 208 915 B1**
(45) Date of publication and mention of the grant of the patent: **12.09.2018**
(21) Application number: 17155112.0
(22) Date of filing: 08.02.2017
(51) Int. Cl.: H02K 5/167, F16C 35/077, F04D 29/02, F04D 29/056, F04D 29/051

(54) **ELECTRIC BLOWER**
ELEKTRISCHES GEBLÄSE
SOUFFLANTE ÉLECTRIQUE

(30) Priority: 17.02.2016 JP 2016028231
(43) Date of publication of application: 23.08.2017
(73) Proprietor: Toshiba Lifestyle Products & Services Corporation, Kawasaki-shi, Kanagawa 210-8543 (JP)
(72) Inventor: OSHIKIRI, Go, Kawasaki-shi, Kanagawa 210-8543 (JP)
(74) Representative: O'Connell, David Christopher

(56) References cited:
- JP-A- H05 340 428
- US-A1- 2006 181 174
- US-A1- 2013 004 304

## Description

### Field of the Invention

An embodiment of the present invention relates to an electric blower.

### Description of the Related Art

An electric blower is known that includes a brushless motor equipped with a rotor, a centrifugal fan adapted to rotate along with rotation of a rotating shaft of the rotor, the rotating shaft adapted to integrally rotatably support the rotor and centrifugal fan, a sleeve through which a shaft is passed, at least one of bearing provided in the sleeve and adapted to rotatably support the rotating shaft, and a frame provided with a through hole in which the sleeve is fixed. US 2013/0004304 A1 discloses an electric blower according to the preamble of claim 1. US 2006/181174 discloses an anti-loose device for securing a stator of a motor to a shaft.

### SUMMARY OF THE INVENTION

In the conventional electric blower, the centrifugal fan, rotating shaft, bearing, and sleeve are assembled beforehand and handled as a whole, it is hereinafter referred to simply as a "rotor component assembly". The sleeve is inserted into the through hole of the frame, and is bonded to the frame with an adhesive. And then, the rotor component assembly is assembled onto the frame. The rotating shaft, the bearing, and the sleeve are inserted into the through hole from an opposite side opposite of the centrifugal fan, which is an end part of the rotor component assembly farther from the centrifugal fan, as an outside diameter of the centrifugal fan is larger than outside diameters of the rotating shaft, bearing, and sleeve.

When the centrifugal fan rotates, a force directed toward the suction side of the centrifugal fan acts on the rotor component assembly. In other words, when the centrifugal fan rotates, a force tending to pull out the sleeve from the through hole of the frame toward the suction side of the centrifugal fan acts on the sleeve supporting the rotor component assembly on the frame.

If the force tending to pull out the sleeve from the through hole exceeds adhesive strength of the adhesive, the sleeve will be detached from the through hole, which adhesion between the sleeve and frame is insufficient or the adhesion becomes insufficient due to deterioration of the adhesive. If the sleeve is detached from the through hole, the centrifugal fan might touch a shroud. Then, the electric blower will fall in efficiency or get broken.

To solve the problems described above, it is an object of the present invention to provide an electric blower that can strongly hold and fix a sleeve onto a frame, and to eventually provide high reliability.

To achieve the above object, an aspect of the present invention provides, an electric blower according to an embodiment of the present invention including a centrifugal fan, a shaft installed integrally rotatably with the centrifugal fan, a sleeve provided with a recess in an outer circumferential surface, at least one of bearing provided in the sleeve and adapted to rotatably support the shaft, a frame provided with a through hole in which the sleeve is fixed; and a stopper filling up a gap between the frame and the recess and adapted to harden and thereby prevent the sleeve from being detached from the through hole.

In preferred embodiments of the above aspect, the following modes may be provided.

It may be desired that the frame includes a cavity connected to the recess.

It may be desired that the frame includes a second recess connected to the cavity.

It may be desired that an end of the sleeve that is closer to the centrifugal fan is closer to the centrifugal fan than a mouth of the through hole that is closer to the centrifugal fan.

It may be desired that the frame is a resin molding, and the stopper is a hardened epoxy adhesive.

### BRIEF DESCRIPTION OF THE DRAWINGS

Fig. 1 is an exploded perspective view of an electric blower according to an embodiment of the present invention;
Fig. 2 is a sectional view of the electric blower according to the embodiment of the present invention;
Fig. 3 is an enlarged sectional view of a bearing component assembly and its surroundings in the electric blower according to the embodiment of the present invention;
Fig. 4 is an enlarged sectional view of the bearing component assembly and its surroundings in the electric blower according to the embodiment of the present invention;
Fig. 5 is an enlarged sectional view of the bearing component assembly and its surroundings in the electric blower according to the embodiment of the present invention;
Fig. 6 is an enlarged sectional view of another example of the bearing component assembly and its surroundings in the electric blower according to the embodiment of the present invention;
Fig. 7 is an enlarged sectional view of another example of the bearing component assembly and its surroundings in the electric blower according to the embodiment of the present invention; and
Fig. 8 is an enlarged sectional view of another example of the bearing component assembly and its surroundings in the electric blower according to the embodiment of the present invention.

### DETAILED DESCRIPTION OF THE PREFERRED EMBODIMENT

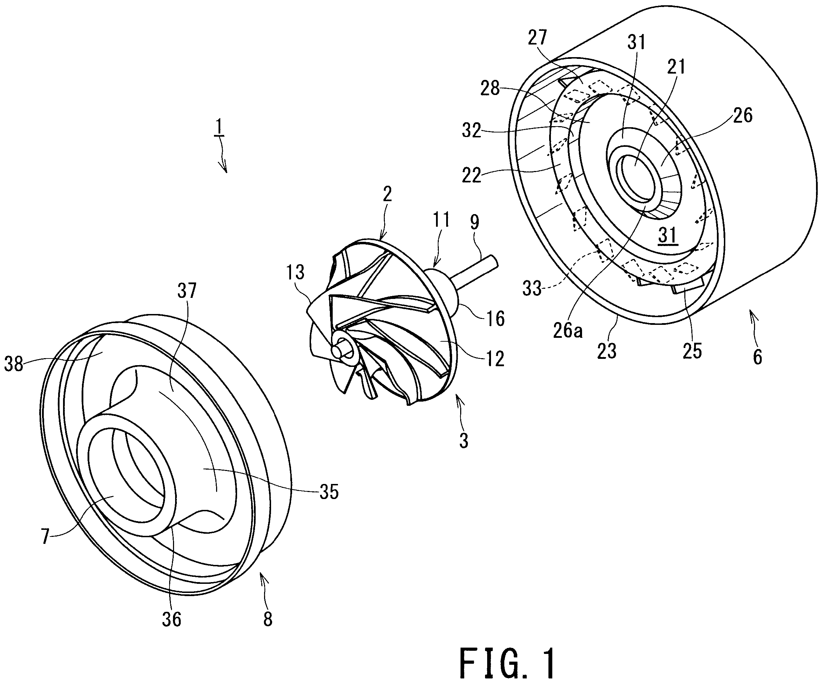

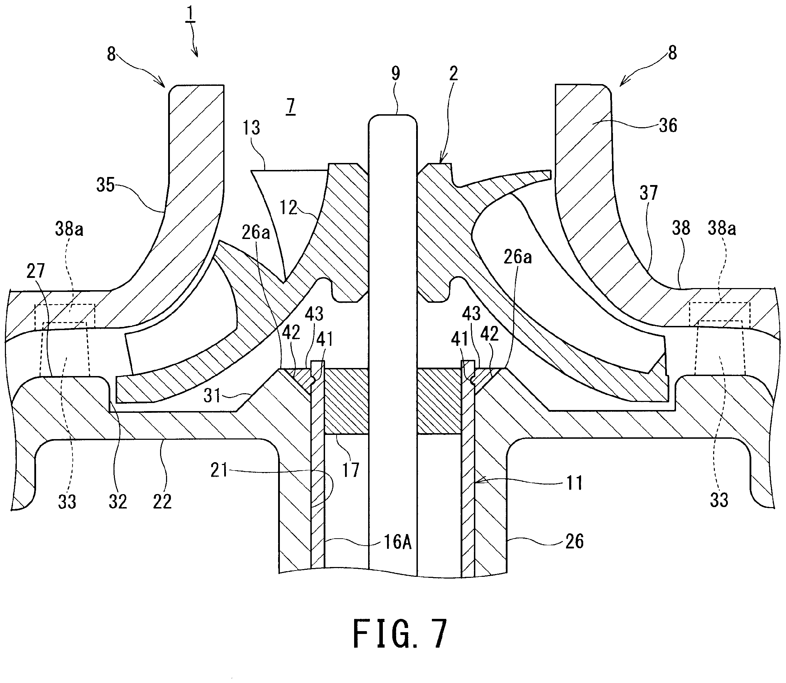

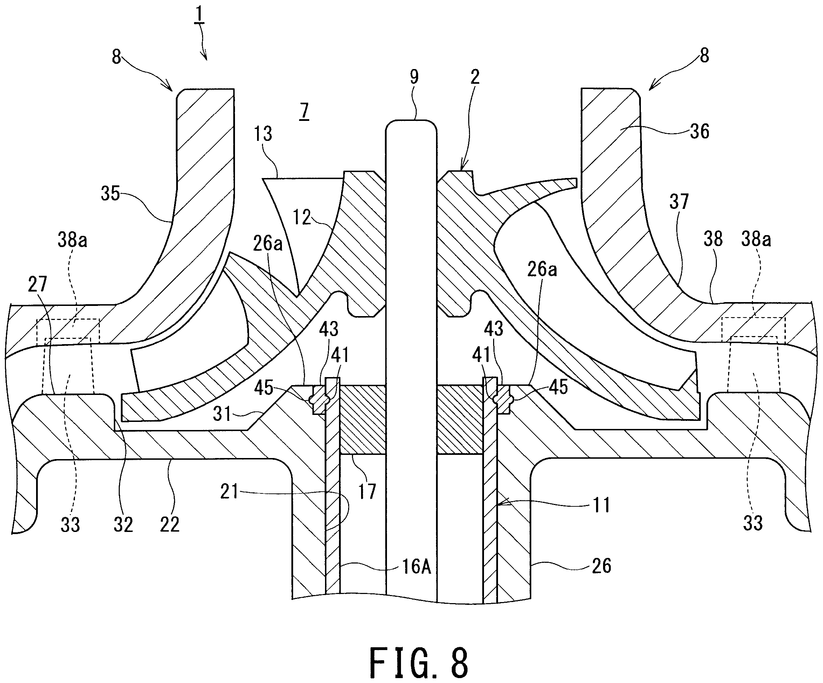

An embodiment of an electric blower according to the present invention will be described with reference to Figs. 1 to 8.

Note that in different drawings, same or equivalent components are denoted by the same reference numerals.

Fig. 1 is an exploded perspective view of the electric blower according to the embodiment of the present invention.

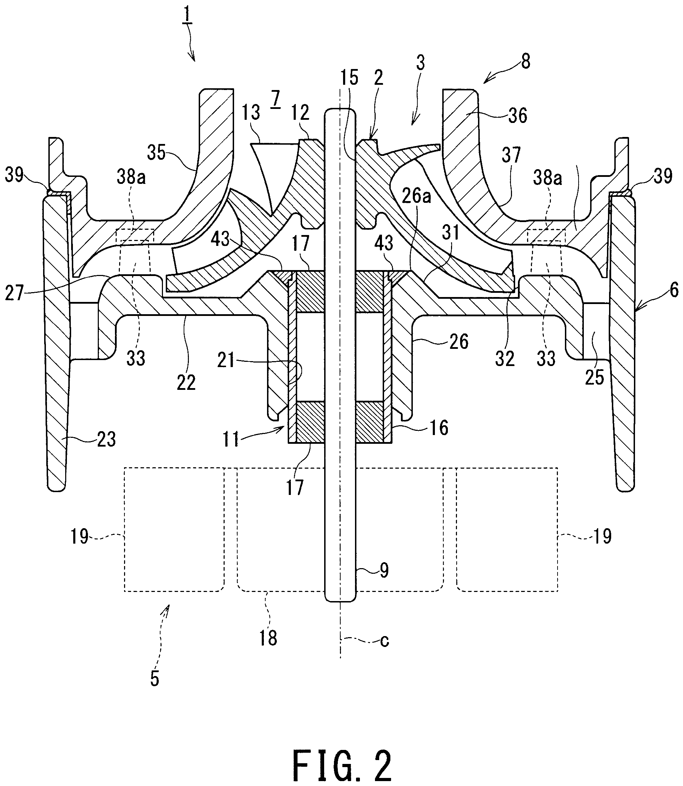

Fig. 2 is a sectional view of the electric blower according to the embodiment of the present invention.

As shown in Figs. 1 and 2, the electric blower 1 according to the present embodiment includes a rotor component assembly 3 including a centrifugal fan 2, an electric motor 5 adapted to drive the centrifugal fan 2, a diffuser 6 adapted to guide a fluid discharged from the centrifugal fan 2 to the electric motor 5, and a shroud 8 provided with an inlet 7 and adapted to cover the centrifugal fan 2. Note that the fluid is exclusively a gas, which is air.

The rotor component assembly 3 includes the centrifugal fan 2, a shaft 9 integrally rotatably fixed to the centrifugal fan 2, and a bearing component assembly 11 adapted to rotatably support the shaft 9 on the diffuser 6. The rotor component assembly 3 is assembled from the centrifugal fan 2, shaft 9, and bearing component assembly 11 beforehand and handled as a whole. The rotor component assembly 3 is assembled to the diffuser 6 as a whole.

One end of the shaft 9 is fixed to the centrifugal fan 2 at one end, and another end of the shaft 9 is connected to the electric motor 5.

The centrifugal fan 2 includes a hub 12 and plural blades 13 projecting from the hub 12. The hub 12 has a hole 15 into which the fixed shaft 9 in central part. The centrifugal fan 2 is placed upstream of the diffuser 6.

The bearing component assembly 11 includes a sleeve 16 and at least one of bearing 17 installed in the sleeve 16 and adapted to rotatably support the shaft 9. A pair of the bearings 17 is placed at respective ends of the sleeve 16, being spaced away from each other. The bearings 17 spaced away from each other supports the shaft 9 properly. The sleeve 16 surrounds and holds the bearings 17 placed concentrically.

The shaft 9, bearings 17, and sleeve 16 are made of metallic materials, and particularly, made of ferrous materials.

The electric motor 5 includes a rotor 18 integrally rotatably fixed to the shaft 9 and a stator 19 configured to surround the rotor 18 by being fixed to the diffuser 6. The electric motor 5 is placed on a downstream side of the diffuser 6.

The diffuser 6 also functions as a frame adapted to rotatably support the shaft 9 and centrifugal fan 2 via the bearing component assembly 11. Thus, the diffuser 6 has a through hole 21 for use to fix the sleeve 16. The diffuser 6 holds the stator 19 of the electric motor 5.

The diffuser 6 is a resin molding, for example, a molding of a Poly Ethylene Terephthalate (PET) resin mixed with glass fiber. The diffuser 6 includes a hub 22, an outer shell 23 cylindrical in shape and concentric with the hub 22, and plural axis direction vanes 25.

The hub 22 includes a central part 26 cylindrical in shape and adapted to hold the bearing component assembly 11, an outer ring part 27 adapted to define a passage leading a fluid flowing out of the centrifugal fan 2 toward the electric motor 5, in conjunction with the outer shell 23, and a disc part 28 extending between the central part 26 and outer ring part 27.

A first stepped part 31 configured to demarcate the central part 26 and disc part 28 from each other is provided on a surface of the hub 22 that faces to the centrifugal fan 2. The first stepped part 31 slopes down outward the hub 22, being away from the centrifugal fan 2.

A second stepped part 32 configured to demarcate the disc part 28 and outer ring part 27 from each other is provided on the surface of the hub 22 that faces to the centrifugal fan 2.

When viewed from the side of the centrifugal fan 2, there is a cavity on an outer side of the first stepped part 31, that is, outer peripheral side of the hub 22 of the first stepped part 31, and on an inner side of the second stepped part 32, that is, center side of the hub 22 of the second stepped part 32. A bottom surface of the cavity corresponds to a surface of the disc part 28 that faces to the centrifugal fan 2. An outer periphery of a rear shroud of the centrifugal fan 2 is placed in the cavity.

The through hole 21 in which the sleeve 16 is fixed is provided in the central part 26 of the hub 22. The through hole 21 holds and fixes the bearing component assembly 11 via the sleeve 16, and rotatably supports the shaft 9 and centrifugal fan 2.

The outer shell 23 surrounds the entire hub 22 by being spaced away from the hub 22.

The axis direction vanes 25 have a two-dimensional airfoil section. The axis direction vanes 25 are installed between the outer shell 23 and hub 22, integrating the outer shell 23 and hub 22. Trailing edges of the axis direction vanes 25 provide a fluid outlet for the electric blower 1. That is, the diffuser 6 guides the fluid discharged from the centrifugal fan 2 toward the electric motor 5.

The axis direction vanes 25 define the fluid outlet of the diffuser 6 between the hub 22 and outer shell 23 via a space serving as a passage.

Note that the diffuser 6 may be provided with plural radial direction vanes 33 (broken lines). The radial direction vanes 33 are provided in the outer ring part 27, being placed at intervals in a circumferential direction. The radial direction vanes 33 also have a two-dimensional wing section. When the diffuser 6 is provided with the radial direction vanes 33, plural recesses 38a corresponding to the radial direction vanes 33 are provided on an inner surface of a third wall 38 of the shroud 8. The radial direction vanes 33 are fixed to the diffuser 6 by entering the respective recesses 38a.

The shroud 8 corresponds to a front shroud of the centrifugal fan 2. The shroud 8 is provided with a wall part 35 adapted to cover those parts of the centrifugal fan 2 and the diffuser 6. The wall part 35 is located on an upstream side of the centrifugal fan 2 and the diffuser 6. The wall part 35 includes a first wall 36 cylindrical in shape and provided with the inlet 7 adapted to lead the fluid to the centrifugal fan 2, a second wall 37 shaped like a cone and configured to spread gradually along the blades 13 of the centrifugal fan 2, and the third wall 38 adapted to close the upstream side of the diffuser 6.

The inlet 7 is a circular opening serving as a fluid inlet of the electric blower 1.

The shroud 8 is bonded and fixed to the outer shell 23 of the diffuser 6 with an adhesive 39. The shroud 8 covering the upstream side of the centrifugal fan 2 and the diffuser 6 defines a passage running from the fluid inlet, that is, inlet 7, of the electric blower 1 to the fluid outlet, that is, trailing edges of the plural axis direction vanes 25.

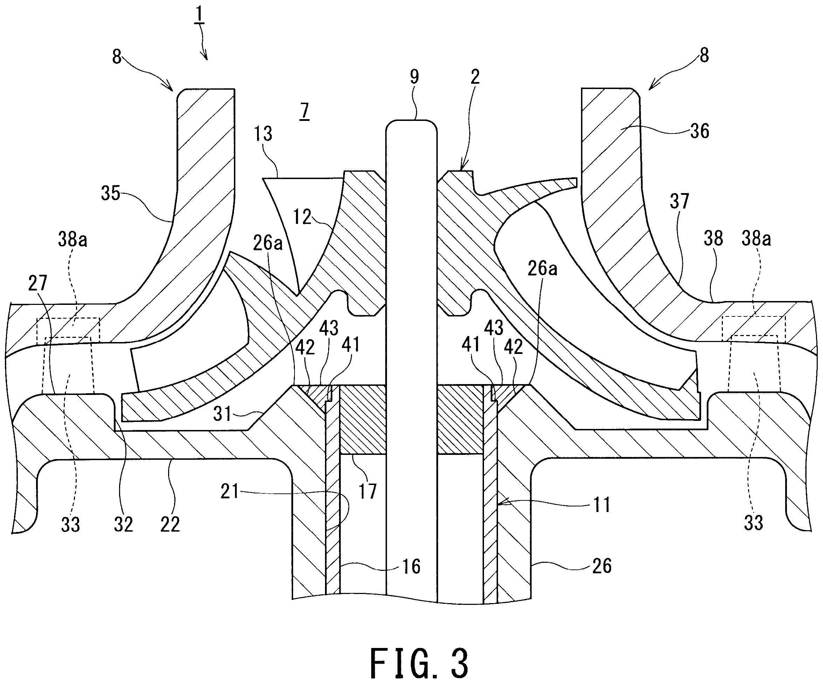

Figs. 3 to 5 are enlarged sectional views of the bearing component assembly and its surroundings in the electric blower according to the embodiment of the present invention.

As shown in Figs. 3 to 5 as well as Fig. 2, the sleeve 16 of the electric blower 1 according to the embodiment of the present invention has a recess 41 in an outer circumferential surface.

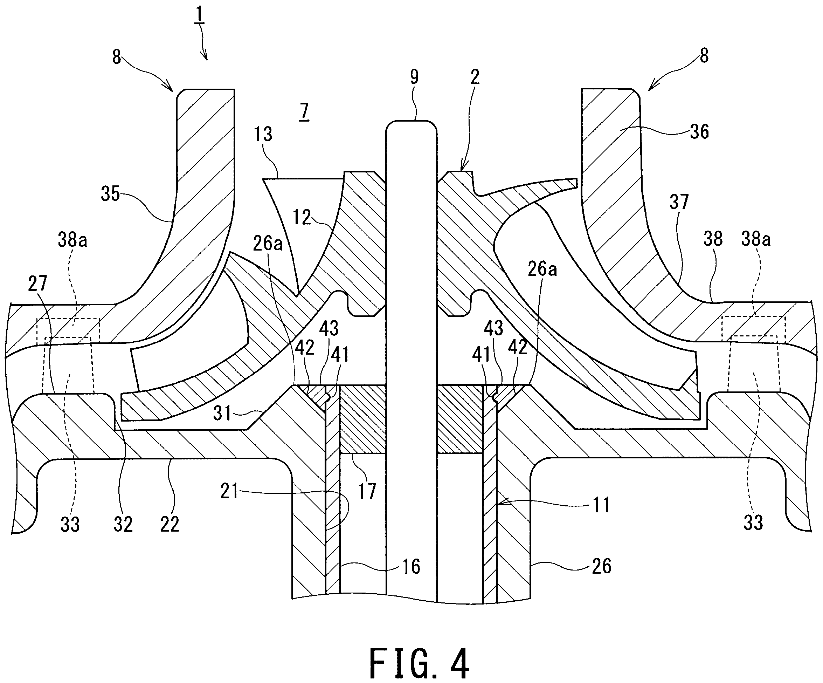

The recess 41 is provided on an end of the sleeve 16 that is closer to the centrifugal fan 2. As shown in Fig. 2 and Fig. 3, the recess 41 may be a notch opening to the end of the sleeve 16 that is closer to the centrifugal fan 2. As shown in Fig. 4, the recess 41 may extend like a groove on the outer circumferential surface of the sleeve 16. Also, recesses 41 may be provided at plural locations on the outer circumferential surface of the sleeve 16 discontinuously in the circumferential direction.

The diffuser 6 has a chamfered, inclined surface 42 on a mouth, that is, an open end of the through hole 21 that is closer to the centrifugal fan 2. The inclined surface 42 is provided inward of the first stepped part 31 i.e., on the center side of the hub 12. A wedge-shaped cavity is defined between the inclined surface 42 and sleeve 16. The wedge-shaped cavity is approaching the sleeve 16 with increasing distance from the centrifugal fan 2. The wedge-shaped cavity is connected to the recess 41 on the sleeve 16.

When the sleeve 16 is placed at a predetermined position of the through hole 21 in the diffuser 6, at least a portion of the recess 41 that includes a part most distant from the centrifugal fan 2 is placed in the he wedge-shaped cavity drawn by the inclined surface 42 by remaining more distant from the centrifugal fan 2 than an end face 26a of the central part 26 of the hub 22.

The electric blower 1 includes a stopper 43 filling up a gap between the diffuser 6 and the recess 41 of the sleeve 16 and adapted to harden and thereby prevent the sleeve 16 from being detached from the through hole 21.

The stopper 43 is charged into the cavity between the inclined surface 42 of the diffuser 6 and the sleeve 16 and enters the recess 41 of the sleeve 16. The stopper 43 is, for example, an epoxy adhesive filled into the cavity between the inclined surface 42 and sleeve 16 when the stopper 43 has fluidity before curing. The hardened stopper 43 is integrated strongly with the diffuser 6 made of resin while entering the recess 41 of the sleeve 16 to function as an anchor and prevent the sleeve 16 from being detached from the through hole 21.

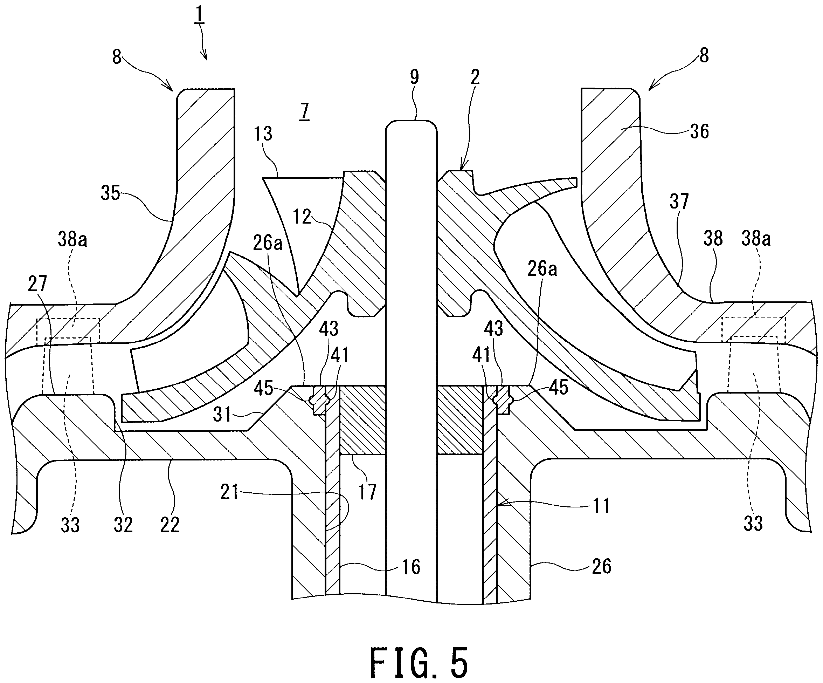

Note that, when a recess 45 is provided also on the diffuser 6 as shown in Fig. 5, the stopper 43 can fasten the diffuser 6 and sleeve 16 together more strongly. In that case, it is not necessary that the inclined surface 42 is provided at the mouth of the through hole 21. In this case, a groove-like space connected to the recess 41 on the sleeve 16 and recess 45 on the diffuser 6 is defined between the sleeve 16 and the diffuser 6. The stopper 43 is charged into the recess 41 and recess 45 through this space and hardened.

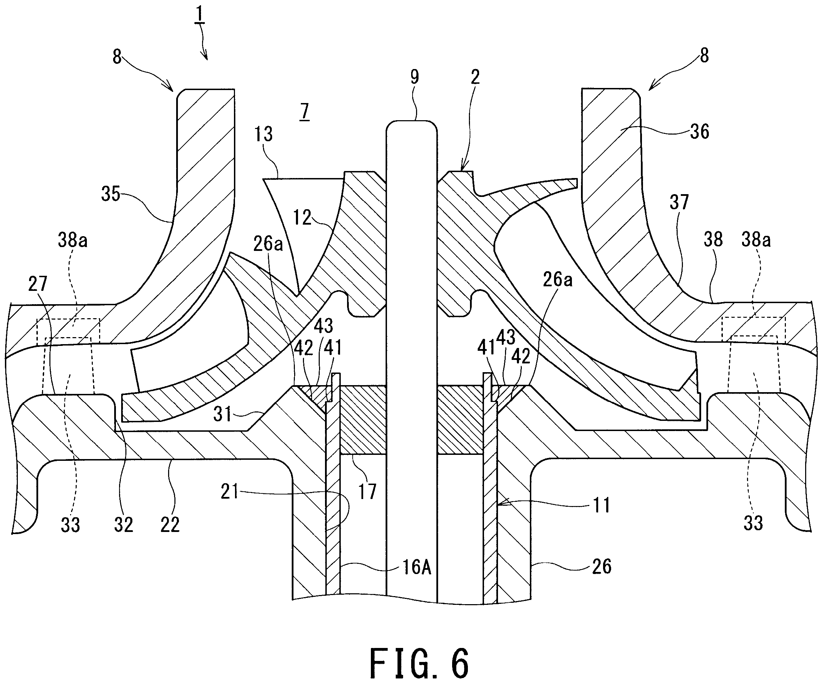

Fig. 6 to Fig. 8 are enlarged sectional views of other examples of the bearing component assembly and its surroundings in the electric blower according to the embodiment of the present invention.

As shown in Fig. 6 to Fig. 8, an end of a sleeve 16A of the electric blower 1 that is closer to the centrifugal fan 2 is closer to the centrifugal fan 2 than the mouth of the through hole 21 that is closer to the centrifugal fan 2. In other words, the end of the sleeve 16Athet is closer to the centrifugal fan 2 protrudes towards the centrifugal fan 2 from the mouth of the through hole 21 that is closer to the centrifugal fan 2.

Now, the rotor component assembly 3 including the centrifugal fan 2 is inserted into the through hole 21 from an end of the shaft 9 that is farther from the centrifugal fan 2 and bonded and fixed to the diffuser 6 with an adhesive applied beforehand to circumferences of the sleeves 16 and 16A. The adhesive applied to the sleeves 16 and 16A fills a gap between the through hole 21 in the diffuser 6 and the sleeves 16 and 16A, and then, fills the recesses 41 on the sleeves 16 and 16A at the mouth of the through hole 21 as the stopper 43. Thus, the adhesive as a filler that is to be the stopper 43 is covered up by the centrifugal fan 2 before hardening, and is difficult to visually check for condition directly.

Consequently, when the adhesive as a filler that is to be the stopper 43 is applied excessively, the adhesive might overflow from the end face 26a of the hub 22 and the end of the sleeve 16. The overflowing extra adhesive can enter an inside of the sleeve 16 and obstruct rotation of the shaft 9 and centrifugal fan 2.

Thus, even if the adhesive as a filler that is to be the stopper 43 is applied excessively, use of the sleeve 16A, of which the end closer to the centrifugal fan 2 is closer to the centrifugal fan 2 than the mouth of the through hole 21 allows the electric blower 1 to drain the adhesive outward in a radial direction of the sleeve 16A. Consequently, the electric blower 1 can prevent the adhesive from entering an inner side of the sleeve 16A, reliably ensure rotation of the shaft 9 and centrifugal fan 2, and thereby improve quality and reliability.

The electric blower 1 according to the present embodiment includes the stopper 43 filling up the gap between the diffuser 6 and the recess 41 of the sleeve 16 and adapted to harden and thereby prevent the sleeve 16 from being detached from the through hole 21. Consequently, the electric blower 1 prevents the rotor component assembly 3 from being detached toward the shroud 8, and thereby improves reliability.

The electric blower 1 according to the present embodiment includes the end of the sleeve 16A that is closer to the centrifugal fan 2 to the centrifugal fan 2 than the mouth of the through hole 21 which is closer to the centrifugal fan 2. Consequently, the electric blower 1 strengthens soundness of the rotation of the shaft 9 and centrifugal fan 2, and eventually improves reliability.

The electric blower 1 according to the present embodiment includes the end of the sleeve 16A which is closer to the centrifugal fan 2 to the centrifugal fan 2 than the mouth of the through hole 21 which is closer to the centrifugal fan 2. Consequently, the electric blower 1 can relax a control limit, such as a tolerance, for an application amount of the adhesive used to fix the sleeve 16A to the diffuser 6 and thereby simplify processes.

The electric blower 1 according to the present embodiment is able to apply the stopper 43 made of epoxy adhesive to the diffuser 6 made of resin. Consequently, the electric blower 1 excels in working efficiency and in safety.

Therefore, the electric blower 1 according to the present embodiment can strongly hold and fix the sleeves 16 and 16A to the diffuser 6, and eventually improve reliability.

While certain embodiment has been described, this embodiment has been presented by way of example only, and is not intended to limit the scope of the inventions. Indeed, the novel embodiment described herein may be embodied in a variety of other forms; furthermore, various omissions, substitutions and changes in the form of the embodiment described herein may be made without departing from the spirit of the inventions. The accompanying claims and their equivalents are intended to cover such forms or modifications as would fall within the scope and spirit of the inventions.

## Claims

1. An electric blower (1) comprising:
a centrifugal fan (2);
a shaft (9) installed integrally rotatably with the centrifugal fan (2);
a sleeve (16) provided with a recess (41) in an outer circumferential surface;
at least one bearing (17) provided in the sleeve (16) and adapted to rotatably support the shaft (9);
a frame provided with a through hole (21) in which the sleeve (16) is fixed; **characterised by** a stopper (43) filling up a gap between the frame and the recess (41) and adapted to harden and thereby prevent the sleeve (16) from being detached from the through hole (21).

2. The electric blower according to claim 1, wherein the frame includes a cavity connected to the recess (41).

3. The electric blower according to claim 2, wherein the frame includes a second recess connected to the cavity.

4. The electric blower according to any one of claims 1 to 3, wherein an end of the sleeve (16) that is closer to the centrifugal fan (2) is closer to the centrifugal fan (2) than a mouth of the through hole that is closer to the centrifugal fan (2).

5. The electric blower according to any one of claims 1 to 4, wherein:
the frame is a resin molding; and
the stopper (43) is a hardened epoxy adhesive.

## Patentansprüche

1. Elektrisches Gebläse (1), umfassend:
einen Zentrifugallüfter (2);
eine Welle (9), die ganzheitlich drehbar mit dem Zentrifugallüfter (2) installiert ist;
eine Hülse (16), die mit einer Aussparung (41) in einer äußeren Umfangsfläche bereitgestellt ist;
mindestens ein Lager (17), das in der Hülse (16) bereitgestellt und angepasst ist, um die Welle (9) drehbar zu lagern;
einen Rahmen, der mit einem Durchgangsloch (21) bereitgestellt ist, in dem die Hülse (16) befestigt ist; **gekennzeichnet durch** einen Anschlag (43), der einen Spalt zwischen dem Rahmen und der Aussparung (41) ausfüllt und angepasst ist, zu härten und dadurch zu verhindern, dass sich die Hülse (16) von dem Durchgangsloch (21) löst.

2. Elektrisches Gebläse gemäß Anspruch 1, wobei der Rahmen eine Kavität enthält, die mit der Aussparung (41) verbunden ist.

3. Elektrisches Gebläse gemäß Anspruch 2, wobei der Rahmen eine zweite Aussparung enthält, die mit der Kavität verbunden ist.

4. Elektrisches Gebläse gemäß einem der Ansprüche 1 bis 3, wobei ein Ende der Hülse, das näher an dem Zentrifugallüfter (2) ist, näher an dem Zentrifugallüfter ist als eine Mündung des Durchgangslochs, die näher an dem Zentrifugallüfter (2) ist.

5. Elektrisches Gebläse gemäß einem der Ansprüche 1 bis 4, wobei:
der Rahmen eine Harzformung ist; und der Anschlag (43) ein gehärteter Epoxidklebstoff ist.

## Revendications

1. Une souffleuse électrique (1) comprenant :
un ventilateur centrifuge (2) ;
un arbre (9) installé de manière rotative et intégrale avec le ventilateur centrifuge (2) ;
un manchon (16) muni d'un évidement (41) dans une surface circonférentielle extérieure; au moins un palier (17) prévu dans le manchon (16) et adapté pour supporter de manière rotative l'arbre (9) ;
un châssis muni d'un trou traversant (21) dans lequel le manchon (16) est fixé ;
**caractérisé par** un bouchon (43) remplissant un espace entre le châssis et l'évidement (41) et adapté pour durcir et ainsi empêcher le manchon (16) de se détacher du trou traversant (21).

2. La souffleuse électrique selon la revendication 1, dans laquelle le châssis comprend une cavité reliée à l'évidement (41).

3. La souffleuse électrique selon la revendication 2, dans laquelle le châssis comprend un deuxième évidement relié à la cavité.

4. La souffleuse électrique selon l'une quelconque des revendications 1 à 3, dans laquelle une extrémité du manchon (16) qui est plus proche du ventilateur centrifuge (2) est plus proche du ventilateur centrifuge (2) qu'une bouche du trou traversant qui est plus proche du ventilateur centrifuge (2).

5. La souffleuse électrique selon l'une quelconque des revendications 1 à 4, dans laquelle : le châssis est un moulage de résine ; et le bouchon (43) est un adhésif durcisseur époxy.
